# EUROPÄISCHE PATENTSCHRIFT

(11) **EP 2 686 083 B1**
(45) Veröffentlichungstag und Bekanntmachung des Hinweises auf die Patenterteilung: **24.06.2015**
(21) Anmeldenummer: 12723822.8
(22) Anmeldetag: 13.03.2012
(51) Int. Cl.: B01D 29/01, B01D 29/52, B01D 29/66, B29C 47/00, B29C 47/08

(54) **FILTRIERVORRICHTUNG FÜR HOCHVISKOSE FLUIDE**
FILTERING DEVICE FOR HIGH-VISCOSITY FLUIDS
DISPOSITIF DE FILTRATION POUR FLUIDES DE HAUTE VISCOSITÉ

(30) Priorität: 14.03.2011 DE 102011001262
(43) Veröffentlichungstag der Anmeldung: 22.01.2014
(73) Patentinhaber: Nordson Holdings S.à r.l. & Co. KG, 40699 Erkrath (DE)
(72) Erfinder: WÖSTMANN, Stefan, 48336 Füchtorf (DE)
(74) Vertreter: Tarvenkorn, Oliver
(86) Internationale Anmeldenummer: PCT/DE2012/100065
(87) Internationale Veröffentlichungsnummer: WO 2012/122979

(56) Entgegenhaltungen:
- EP-A1- 0 554 237
- EP-A1- 0 976 525
- EP-B1- 1 778 379
- WO-A1-92/16351
- WO-A2-2008/104863

## Beschreibung

Die Erfindung betrifft eine Filtriervorrichtung für hochviskose Fluide mit den Merkmalen des Oberbegriffs des Anspruchs 1.

Zur Filtrierung hochviskoser Medien wie insbesondere Kunststoffschmelze sind Filtriervorrichtungen bekannt, die in Form eines sog. Siebbolzenwechslers ausgebildet sind. Bei der beispielsweise aus der EP 1 778 379 B1 bekannten Bauweise sind in einem Gehäuse zwei bolzenförmige Siebträgerelemente verschiebbar angeordnet. Jedes der Siebträgerelemente besitzt wenigstens eine Siebstelle, an der jeweils ein Siebraum ausgebildet ist. In jeden Siebraum ist wenigstens ein Filterelement eingesetzt. Zuführkanäle in dem Gehäuse verzweigen sich auf die Siebstellen hin, so dass Schmelze durch die jeweiligen Filterelemente hindurch in die Siebräume geleitet wird. In Fließrichtung gesehen hinter den Filterelementen sind wiederum Teilkanäle vorgesehen, durch welche die Kunststoffschmelze abfließt. Die Teilkanäle vereinigen sich an einem Punkt am oder im Gehäuse oder in einem gemeinsamen Abfuhrkanal, welcher aus dem Gehäuse heraus führt.

Die bekannte Filtriervorrichtung ermöglicht auch eine Rückspülung der Filterelemente, indem jeweils eines der Siebträgerelemente aus der Produktionsstellung herausgefahren wird, so dass es auf der Schmutzseite des Siebs nicht mehr mit Fluid bzw. Schmelze beaufschlagt wird. Von der rückwärtigen Seite her, der sogenannten Reinseite, wird Schmelze in den Siebraum und von hinten durch das Filterelement geleitet. Auf der Schmutzseite am Filterelement anhaftende Fremdpartikel oder Agglomerate können durch den Rückspülvorgang vom Filterelement gelöst werden.

Bei der in EP 1 778 379 B1 offenbarten Vorrichtung ist das oben beschriebene grundsätzliche Prinzip eines rückspülbaren Siebbolzenwechslers zudem in der Weise verbessert, dass je Teilkanal, der von einer in Rückspülposition befindlichen Siebstelle weg führt, Verdrängerkolben vorgesehen sind, welche in die Teilkanäle auf der Reinseite eintauchen können. In dem Moment, in welchem die Verdrängerkolben in die Teilkanäle eingeschoben werden, wird eine Absperrung des Abfuhrkanals bewirkt. In dem Teilkanal vorhandene Schmelze wird also nicht mehr in den Abfuhrkanal und damit in nachgeschaltete Einheiten gedrückt, sondern ausschließlich in die zur Rückspülung vorgesehene Siebstelle. Der Verdrängerkolben schiebt das im Teilkanal stehende Fluid genau umgekehrt zur im Produktionsbetrieb herrschenden Fließrichtung in den Siebraum und von hinten durch das Filterelement, um Anhaftungen daran zu lösen.

Der Vorteil des zusätzlichen Verdrängerkolbens besteht darin, dass die Filtrierung in dem jeweils anderen Siebträgerelement und/oder an den anderen Siebstellen völlig unbeeinflusst von dem Rückspülvorgang bleibt. Während herkömmliche Rückspül-Siebbolzenwechsler immer einen Teil des Fluids aus dem Produktionsbetrieb abzweigen mussten, um eine Rückspülung vorzunehmen, ermöglichen die Verdrängerkolben die Entkopplung des zur Rückspülung benötigten Druckes und der Fluidmenge vom Produktionsprozess. Die einzige Verbindung zwischen den Siebstellen auf der Schmutzseite besteht nämlich an der Vereinigung der Teilkanäle auf der Schmutzseite bzw. der Abfuhrkanäle, welche von beiden Siebstellen zu einem gemeinsamen Mündungspunkt am Gehäuse führen. Indem der Verdrängerkolben diesen Abfuhrkanal bei der Rückspülung versperrt, ist auch die Verbindung zum jeweils anderen Fließweg unterbrochen. Ein Druckverlust im Produktionsstrang tritt während der Rückspülung nicht auf.

Die bekannte Filtriervorrichtung mit dem Verdrängerkolben hat sich somit bewährt. Nachteilig ist allerdings, dass im Bereich zwischen Siebstelle und Verdrängerkolben immer ein größeres Volumen an Fluid vorrätig gehalten werden muss, um mit dem Verdrängerkolben später eine effektive Rückspülung durchführen zu können. Um bei gegebener Baugröße und damit einer begrenzten Länge des Teilkanals eine größeres Volumen zwischenspeichern zu können, muss im Teilkanal ein vergrößerter Durchmesser vorgesehen werden. Diese Änderung der Fließkanalgeometrie auf der Abfuhrseite wiederum führt zu reduzierten Strömungsgeschwindigkeiten und damit zu längeren Verweilzeiten der im Teilkanal vorhandenen Fluidmenge, wodurch z.B. bei der Filtrierung von Kunststoffschmelze im Zusammenhang mit dem geheizten Gehäuse die Gefahr einer thermisch bedingten Veränderung besteht.

Aufgabe der Erfindung ist es somit, eine Filtriervorrichtung der eingangs genannten Art so zu verbessern, dass im Produktionsbetrieb Zonen mit längeren Verweilzeiten des Fluids deutlich reduziert oder ganz vermieden werden.

Diese Aufgabe wird durch eine Filtriervorrichtung mit den Merkmalen des Anspruchs 1 gelöst.

Indem der Verdrängerkolben eine innere Fluidleitung aufweist, kann im Produktionsbetrieb das Fluid durch den Verdrängerkolben hindurchgeführt werden. Die Produktionsstellung des Verdrängerkolbens bzw. seiner Stirnseite kann daher seiner Endstellung während der Rückspülung entsprechen, also derjenigen Stellung am Ende des Hubes, durch welchen das Fluid von der Reinseite her in den Siebraum geleitet wird.

Es bleibt also hinter dem Siebraum bei einigen bevorzugten Ausführungsformen kein offener Teilkanal oder nur ein sehr kurzer. Das aus dem Siebraum austretende Fluid läuft vielmehr direkt in die innere Fluidleitung des Verdrängerkolbens. Es wird also im Produktionsbetrieb kein Reservoir an Fluid für den späteren Moment der Rückspülung vorrätig gehalten. Dieses wird überhaupt erst kurz vor der Rückspülung gebildet und gefüllt. Verweilzeiten des Fluids in einem Bereich mit vergrößertem Durchmesser sind daher auf wenige Sekunden beschränkt.

Die Stirnseite des Verdrängerkolbens schabt zudem beim Rückspülen allenfalls über eine sehr kurze Länge der Teilkanalwandung, welche während der Produktion mit Fluid in Kontakt steht.

Erfindungsgemäß ist bei allen Ausführungsformen das Fluidspeichervolumen dadurch deutlich vergrößert, dass der Teilkanal in einem linearen Teilabschnitt, in den der Verdrängerkolben eintaucht, aufgeweitet ist. Dadurch kann zum Zwecke der Rückspülung mit einer Rückzugsbewegung des Verdrängerkolbens eine große Fluidportion zwischengespeichert werden. Vorzugweise sind die Produktionsstellung des Verdrängerkolbens und sein Verschiebeweg während der Rückspülung derart aufeinander abgestimmt, dass er in all seinen Positionen während der Rückspülung nicht über die Lage in der Produktionsstellung hinaus gelangt. Mit anderen Worten: Die Stirnseite des Verdrängerkolbens erreicht beim Rückspülen niemals eine Position an der Wandung des Teilkanals, welche in der Produktionsstellung nicht vom Verdrängerkolben überdeckt ist. Es liegt also während der Produktion kein solcher Teil der Innenwandung des Teilkanals frei, der später bei der Rückspülung vom Verdrängerkolben irgendwie berührt werden würde.

Der Verdrängerkolben füllt im Produktionsbetrieb den aufgeweiteten Bereich also jeweils vollständig aus, und es ergibt sich ein durchgängiger Fließweg ohne Durchmessersprünge durch das Innere des Verdrängerkolbens hindurch.

Grundvoraussetzung für die erfindungsgemäße Ausbildung ist eine effektive Abdichtung zwischen dem Verdrängerkolben und der Wandung des Teilkanals, so dass keine Leckströme in den Spalt zwischen Verdrängerkolben und Wandung der Bohrungen im Gehäuse, die die Teilkanäle bilden, gelangen können.

Vorgesehen sein kann bei der erfindungsgemäßen Filtriervorrichtung weiterhin, dass die Stirnseite des Verdrängerkolbens in der Produktion bis unmittelbar an das Siebträgerelement herangeführt ist, so dass es überhaupt keinen Längenabschnitt des Teilkanals mehr gibt, der während der Produktion frei liegen würde.

Falls das Siebträgerelement gemäß einer weiterhin bevorzugten Ausführungsform als zylindrischer Bolzen ausgebildet ist, dann besitzt der Verdrängerkolben an seiner Stirnseite vorzugsweise eine komplementäre Ausbildung, d. h. der Radius des Siebbolzens wird als Krümmungsradius auf eine Mulde an der Stirnseite des Verdrängerkolbens übertragen, so dass sich letztere nahtlos an den Siebträgerbolzen anschließen und an diesen anlegen kann.

Vorgesehen sein kann auch, die Filtriervorrichtung als sogenanntes Siebrad auszubilden. Dabei ist ein scheibenförmiger, drehbar gelagerter Siebträger mit auf einem Teilkreis verteilten Siebstellen zwischen zwei Gehäusehälften gelagert. Bei dieser Bauweise ist insbesondere vorgesehen, wenigstens eine Siebstelle im Produktionsbetrieb durchströmt zu halten, während eine andere sich in einer Rückspülposition befindet.

Der innere Fließkanal im Verdrängerkolben ist vorzugsweise so ausgebildet, dass er sich von einer Einlauföffnung, die vorzugsweise trichterförmig ausgebildet ist und die vorzugsweise an der Stirnseite des Verdrängerkolbens liegt, über einen Teil der Längserstreckung des Verdrängerkolbens erstreckt und dann seitlich umgelenkt wird, so dass der innere Fließkanal schließlich an einer Auslauföffnung mündet, die am Außenumfang des Verdrängerkolbens liegt.

Alternativ kann eine Einleitung in die innere Fluidleitung vom Außenumfang her erfolgen. Dazu kann das freie Ende des Kolbens im Durchmesser gegenüber dem Rest des Verdrängerkolbens und gegenüber dem Innendurchmesser des Teilkanals reduziert sein, so dass sich ein Ringspalt ausbildet, von dem aus wenigstens eine radiale Einlaufbohrung in die innere Fluidleitung führen kann.

Gemäß einer weiteren Alternative kann der Verdrängerkolben im Endbereich einen konstanten Durchmesser entsprechend dem Nenndurchmesser des Teilkanals aufweise. An seinem Außenumfang ist wenigstens eine radiale Einlaufbohrung vorgesehen, welche in die innere Fluidleitung führt. Dort, wo das Ende des Verdrängerkolbens im Produktionsbetrieb positioniert ist, ist eine Nut in die Wandung des Teilkanals eingebracht, so dass wiederum eine Strömung in einen Ringspalt und von dort in die innere Fluidleitung ermöglicht ist.

Die Auslauföffnung im Verdrängerkolben liegt bei allen vorstehend beschriebenen Varianten im Produktionsbetrieb genau gegenüber der Mündung des Abfuhrkanals in den Teilkanal. Die von der Reinseite der Siebstelle her kommende Schmelze läuft also im Endbereich, insbesondere direkt an der Stirnseite in den Verdrängerkolben hinein, läuft durch diesen hindurch, wird dann innerhalb des Verdrängerkolbens um 90° bis 150° seitlich abgelenkt und läuft schließlich in den Abfuhrkanal im Gehäuse hinein.

Um den Rückspülbetrieb einzuleiten, wird der Verdrängerkolben zunächst in der während des Produktionsbetriebs herrschende Fließrichtung verschoben, wobei er je nach Größe des Gehäuses auch aus der Öffnung des Teilkanals mit seinem rückwärtigen Ende teilweise herausragen kann. Bei der Bewegung überdeckt die Wandung des Verdrängerkolbens die Mündung des Abfuhrkanals im Gehäuse. Der Fluidstrom wird somit unterbrochen, wodurch folglich die sonstigen Siebstellen von der Rückspülung unbeeinflusst bleiben.

Ein auf die Schmutzseite der erfindungsgemäßen Filtriervorrichtung wirkender Druckerzeuger wie ein Extruder oder eine Schmelzepumpe bewirkt eine Füllung des Teilkanals, welcher nun als Speicher dient. Der Verdrängerkolben kann soweit zurückgezogen werden, bis sein Außenumfang gerade noch die Mündung des Abfuhrkanals abdeckt. Diesen Vorgang kann man mit dem Aufziehen einer Spritze vergleichen.

Anschließend wird der Siebträger in die Spülstellung gebracht. Dann wird der Verdrängerkolben mittels der Kraft eines Hydraulikzylinders oder eines anderen Antriebs in den Teilkanal hineingedrückt, wobei die dort vorhandene Kunststoffschmelze bzw. ein anderes in der Filtriervorrichtung filtriertes Fluid verdrängt und entgegen der üblichen Fließrichtung zurück in den Siebraum gedrückt wird.

Wie oben bereits beschrieben, kann die Endstellung des Verdrängerkolbens bei diesem Rückspülvorgang auch gleich die Produktionsstellung sein. In dem Moment also, in dem der Verdrängerkolben die Rückspülung beendet hat, kann er in der erreichten Position verbleiben. Die Verbindung zum Abfuhrkanal ist dann wieder geöffnet.

Es kann sogar weiteres Fluid von hinten durch den Zufuhrkanal und den inneren Fließkanal des Verdrängerkolbens durch die Siebstelle geleitet werden, um die Rückspülung fortzusetzen.

Es kann aber auch das Siebträgerelement wieder in die Produktionsstellung verfahren werden, um auf der Schmutzseite des Siebraums die Verbindung zum Rückspülkanal wieder zu trennen und wieder die im Produktionsbetrieb herrschende Fließrichtung einzustellen.

Die Erfindung wird mit weiteren vorteilhaften Ausgestaltungen nachfolgend anhand der in der Zeichnung dargestellten Ausführungsbeispiele näher erläutert. Die Figuren zeigen jeweils in Schnittansicht:
- Fig. 1: eine Filtriervorrichtung der Erfindung mit einem Verdrängerkolben gemäß einer ersten Ausführungsform in einer Rückspül-Ausgangsstellung;
- Fig. 2: den Verdrängerkolben in einer Rückspül-Zwischenstellung;
- Fig. 3: den Verdrängerkolben in einer Produktionsstellung;
- Fig. 4: einen Verdrängerkolben gemäß einer zweiten Ausführungsform
- Fig. 5: einen Verdrängerkolben gemäß einer dritten Ausführungsform;
- Fig. 6a-6c: eine Filtriervorrichtung der Erfindung mit einem Verdrängerkolben gemäß einer vierten Ausführungsform.

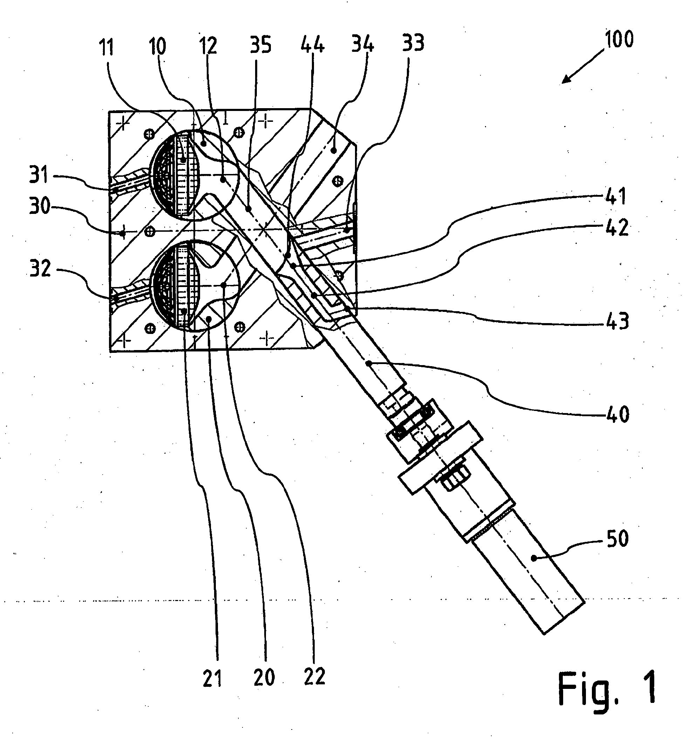

Fig. 1 zeigt eine als Siebbolzenwechsler ausgebildete Filtriervorrichtung 100, die im Wesentlichen besteht aus:
- einem Gehäuse 30,
- in Gehäusebohrungen verschiebbar gelagerten, bolzenförmigen Siebträgerelementen 10, 20,
- einem Verdrängerkolben 40 je Siebträgerelement und
- einer Antriebsvorrichtung 50 für den Verdrängerkolben 40.

Jedes der Siebträgerelemente 10, 20 besitzt jeweils einen Siebraum 12, 22, der in Fig. 1 geschnitten dargestellt ist. Darin eingesetzt ist jeweils ein Filterelement 11, 21.

Auf der Schmutzseite - in den Figuren 1 bis 3 jeweils links - stehen die Siebräume 12, 22 jeweils mit einem ins Gehäuse 30 eingebrachten Rückspülkanal 31, 32 in Verbindung, wenn die Siebträgerelemente 10, 20 in der Rückspülstellung stehen.

Die Schnittdarstellung der Fig. 1 ist so gestaltet, dass die am realen Objekt eigentlich in versetzt zueinander geschichteten Ebenen liegenden Teilkanäle 34, 35 in einer Schnittebene erscheinen. Diese Darstellung soll die Lage der Teilkanäle zueinander verdeutlichen. Aus Gründen der Übersichtlichkeit ist auch nur in dem zuoberst liegenden Teilkanal 35 ein Verdrängerkolben 40 mit Antriebsvorrichtung 50 gezeichnet. Für den dahinterliegenden Teilkanal 34 ist der real dort ebenfalls vorhandene Verdrängerkolben nicht dargestellt worden.

Auf der Reinseite - in den Figuren 1 bis 3 jeweils rechts - stehen die Siebräume 12, 22 jeweils mit einem der ins Gehäuse 30 eingebrachten Teilkanäle 34, 35 in Verbindung. In die Teilkanäle 34, 35 münden wiederum Abfuhrkanäle 33, die bis außen am Gehäus 30 führen oder in einen zentralen Sammelkanal, an dem sich die Fließwege wieder vereinigen. Der in Fig. 1 sichtbare Abfuhrkanal 33 mündet in einem Winkel, der im dargestellten Ausführungsbeispiel etwa 110° beträgt, in den Teilkanal 35 ein.

Der Verdrängerkolben 40 ist an seinem Außenmantel durchgängig zylindrisch ausgebildet. Die teilweise geschnittene Darstellung des Verdrängerkolbens 40 zeigt einen inneren Fließweg, der sich von einer Einlauföffnung 41 an der Stirnseite 44 bis zu einer Auslauföffnung 43 erstreckt. In der Stellung des Verdrängerkolbens 40 gemäß Fig. 1 liegt der Außenmantel des Verdrängerkolbens 40 vor dem Abfuhrkanal 33 und versperrt diesen vollständig.

Die in Fig. 1 gezeigte Stellung entspricht einer Rückspül-Ausgangsstellung. Die im freien Teilkanal 35 angesammelte Menge des Fluids wie einer Kunststoffschmelze kann im anschließenden Hub des Verdrängerkolbens 40 zur Rückspülung benutzt werden.

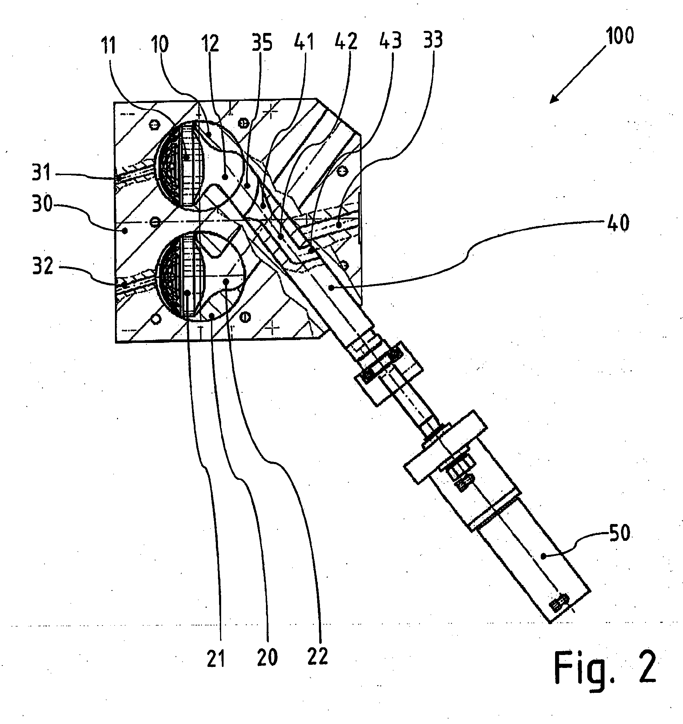

Fig. 2 zeigt eine Stellung des Verdrängerkolbens 40, in der dieser weiter in den Teilkanal 35 eingeführt worden ist, ohne sich jedoch bereits direkt an den Siebraum 12 anzuschließen. Der innere Fließweg 42 im Verdrängerkolben 40 ist abgesperrt worden, so dass die Auslauföffnung 43 durch die Innenwandung des Teilkanals 35 überdeckt ist. Zugleich ist die Mündung des Abfuhrkanals 33 in den Teilkanal 35 unterbrochen. Der Verdrängerkolben 40 kann also die im Teilkanal 35 vorhandene Fluidmenge restlos aus dem Teilkanal 35 hinaus in den Siebraum 12 drücken. In die andere Richtung hingegen kann kein Fluid entweichen.

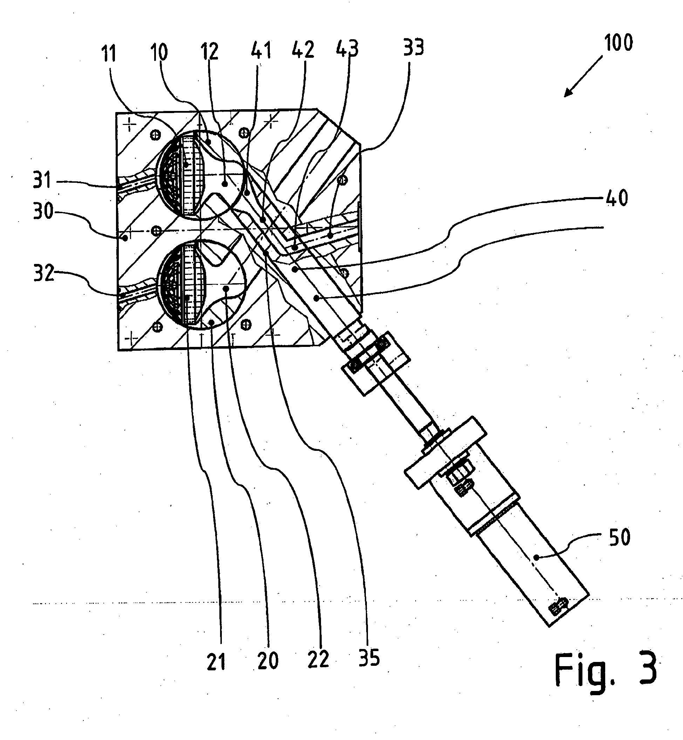

Fig. 3 schließlich zeigt den Verdrängerkolben 40 in seiner Endstellung, welche bei der gezeigten bevorzugten Ausführungsform einer erfindungsgemäßen Filtriervorrichtung 100 der Stellung im Produktionsbetrieb entspricht.

Die Stirnseite 44 des Verdrängerkolbens 40 ist gerundet ausgebildet ist, damit sie sich unmittelbar an das zylinderbolzenförmige Siebträgerelement 10 anschließen kann. Der Teilkanal 35 wird in dieser Stellung nicht direkt durchflutet. Es gibt kein freies Volumen des Teilkanals 35 während des Produktionsbetriebs, also auch keine Bereiche, in denen die Innenwandung des Teilkanals 35 während des Produktionsbetriebes ungeschützt offen liegen würde. Das aus dem Siebraum 12 heraustretende Fluid gelangt vielmehr direkt durch die trichterförmige Einlaufmündung 41 in den inneren Fließkanal 42 und bis zur Auslauföffnung 43 und dann in den sich nahtlos anschließenden Abfuhrkanal 33 hinein.

Die Teilkanäle 34, 35 und damit die Verdrängerkolben 40, die darin geführt sind, sind bei den gezeigten Ausführungsformen in einem Winkel von etwa 30° bis 45° in Bezug auf eine vertikale Hochachse durch das Gehäuse 30 ausgerichtet. Die schräge Anordnung nutzt bei einem rechteckigen Gehäusequerschnitt den Grundriss maximal aus und ermöglicht einen längeren Hub bei gleicher Baugröße. Umgekehrt kann bei gegebenem Hub des Verdrängerkolbens 40 gegenüber einer Anordnung mit einem horizontal liegenden Teilkanal eine kleinere Baugröße erreicht werden.

Der Abfuhrkanal 33 wiederum ist in einer solchen Weise schräg im Gehäuse 30 ausgerichtet, dass zwischen der Längsachse des Verdrängerkolbens 40 und damit sowohl zwischen der Längsachse des Teilkanals 35 wie auch der des inneren Fließkanals 42 eine Umlenkung von größer 90° erreicht wird. Dadurch wird der Fließwiderstand an der Umlenkungsstelle minimiert.

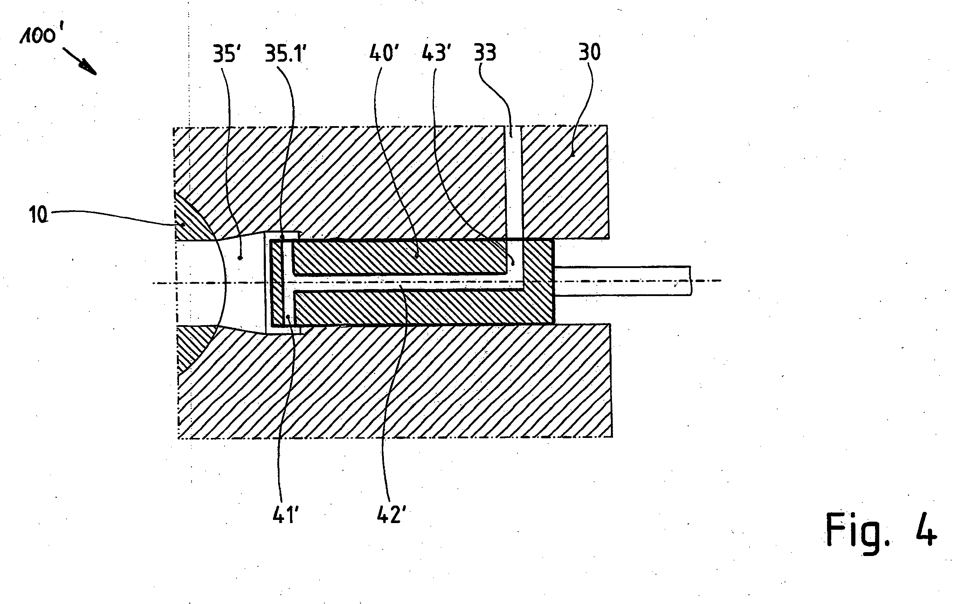

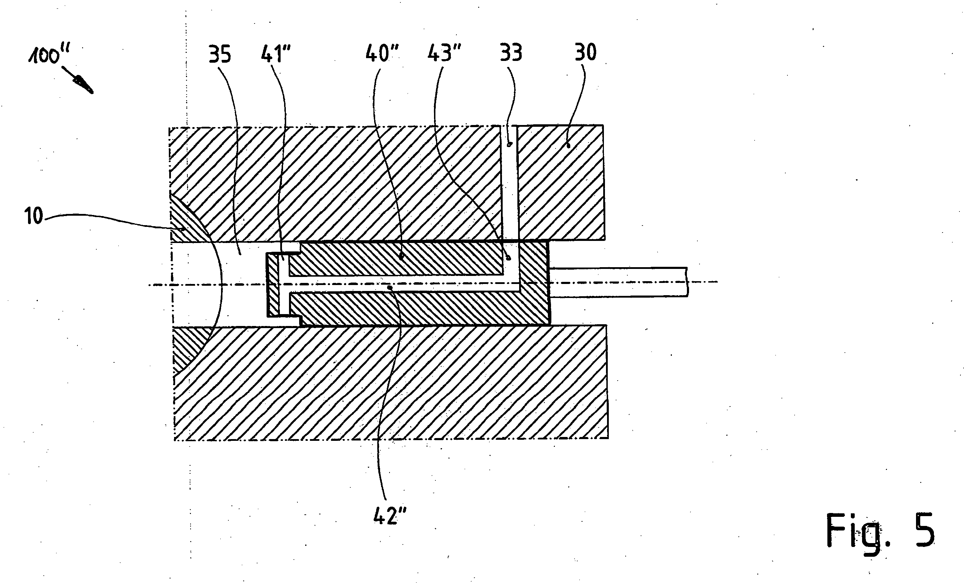

Die Figuren 4, 5 zeigen in schematischen Schnittansichten alternative Gestaltungen von Einlauföffnungen an Verdrängerkolben.

Bei der Ausführungsform nach Figur 4 ist ein andersartiger Teilkanal 35' im Gehäuse 30 vorgesehen. Dieser besitzt keine durchgängig zylindrische Wandung, sondern eine bereichsweise Erweiterung des Innendurchmessers in Form einer Nut 35.1'. Die Nut 35.1' umschließt einen Einlaufbereich am Verdrängerkolben 40', der mehrere radiale Einlauföffnungen 41' aufweist. Von den Einlauföffnungen 41' aus führt eine innere Fluidleitung zur Auslauföffnung 43', welche vor dem Abfuhrkanal 33 im Gehäuse 30 mündet. Der Verdrängerkolben 40' selber besitzt im Bereich zwischen Einlauf- und Auslauföffnung 41', 43' eine zylindrische Form mit einheitlichem Durchmesser.

Bei der Ausführungsform nach Figur 5 sind an einem Verdrängerkolben 40" ebenfalls mehrere radiale Einlauföffnungen 41' vorgesehen. Diese münden wieder am Außenumfang des Verdrängerkolbens 40", jedoch in einem Endabsatz mit reduziertem Durchmesser, so dass sich zwischen der Innenwandung des Teilkanals und dem Bereich mit den Einlauföffnungen 41" wiederum ein Ringspalt ausbilden kann, so wie bei der Ausführungsform nach Figur 4 auch. Von den Einlauföffnungen 41" aus führt eine innere Fluidleitung zur Auslauföffnung 43", welche vor dem Abfuhrkanal 33 im Gehäuse 30 mündet.

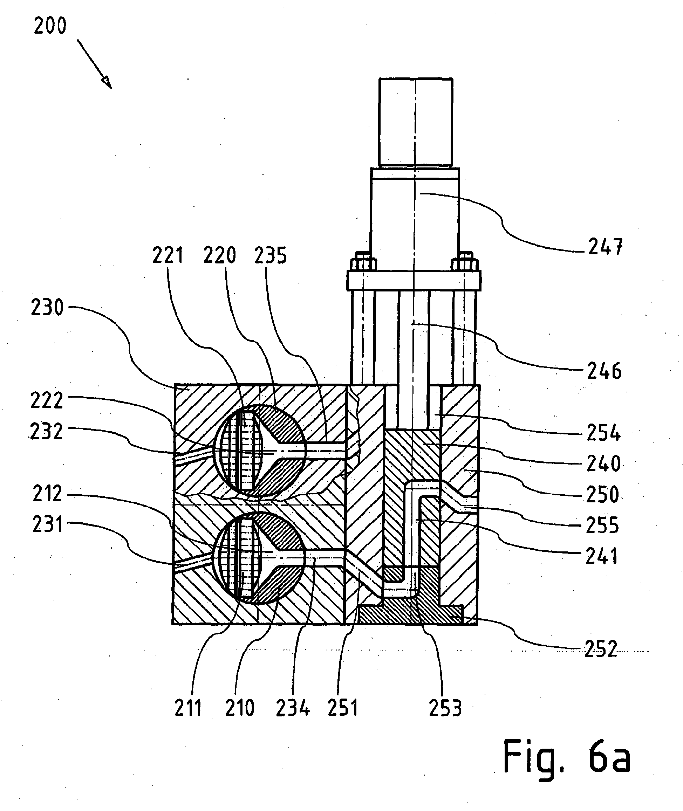

Bei der Ausführungsform einer Filtriervorrichtung 200, die in den Figuren 6a - 6c dargestellt ist, ist ein Zusatzgehäuse 250 vorgesehen, das entweder, wie dargestellt, als getrenntes,Element an ein übliches Gehäuse 230 angesetzt ist, oder das einteilig mit dem Gehäuse 230 in einem Block ausgebildet ist.

Im Gehäuse 230 sind in Gehäusebohrungen zwei verschiebbar gelagerte, bolzenförmige Siebträgerelemente 10, 20 angeordnet, von denen jedes jeweils wenigstens einen Siebraum 212, 222 besitzt. Darin eingesetzt ist jeweils ein Filterelement 211, 221.

Auf der Schmutzseite - in den Figuren 6a bis 6c jeweils links - stehen die Siebräume 212, 222 jeweils mit einem ins Gehäuse 230 eingebrachten Rückspülkanal 231, 232 in Verbindung, wenn die Siebträgerelemente 210, 220 in ihrer Rückspülstellung stehen.

Auf der Reinseite - in den genannten Figuren jeweils rechts - stehen die Siebräume 212, 222 jeweils mit einem der ins Gehäuse 230 eingebrachten Teilkanäle 234, 235 in Verbindung.

Bei der Filtriervorrichtung 200 setzen sich die Teilkanäle 234 bis in das Zusatzgehäuse 250 fort. Im Zusatzgehäuse 250 ist als Eintritt ein weiterer Abschnitt 251 des Teilkanals ausgebildet, der in ein Absperrelement 252 übergeht und sich in dessen innerem Fließkanal 253 weiter fortsetzt. Im Zusatzgehäuse 250 ist als Fluidspeicher 254 eine von oben nach unten durchlaufende Bohrung ausgebildet, die einfach zu fertigen ist. Sie ist nach unten durch das fest eingesetzte, aber zu Reinigungszwecken demontierbare Absperrelement 252 verschlossen und nach oben durch den Verdrängerkolben 240 abgeschlossen, welche übe reine Kolbenstange 246 von einem Antrieb 247 gehoben und gesenkt werden kann.

In der Stellung gemäß Fig. 6a findet der Produktionsbetrieb statt. Das Fluid strömt aus dem Siebraum 212 durch die Teilabschnitte 234, 251, 253 des Teilkanals. Der Verdrängerkolben 240 ist maximal an das Absperrelement 252 herangeschoben, so dass kein Zwischenraum mit dem erweiterten Durchmesser der Bohrung 254 mehr offen bleibt. Vielmehr geht der Teilkanal 253 von seinem Austritt aus dem Absperrelement 252 direkt und ohne Versatz oder Durchmessersprung in eine Eintrittsöffnung an der Stirnseite des Verdrängerkolbens 240. Von dort geht er durch den inneren Fließkanal 241 und tritt am Umfang des Verdrängerkolbens 240 aus, wo er in einen Abfuhrkanal 33 übergeht.

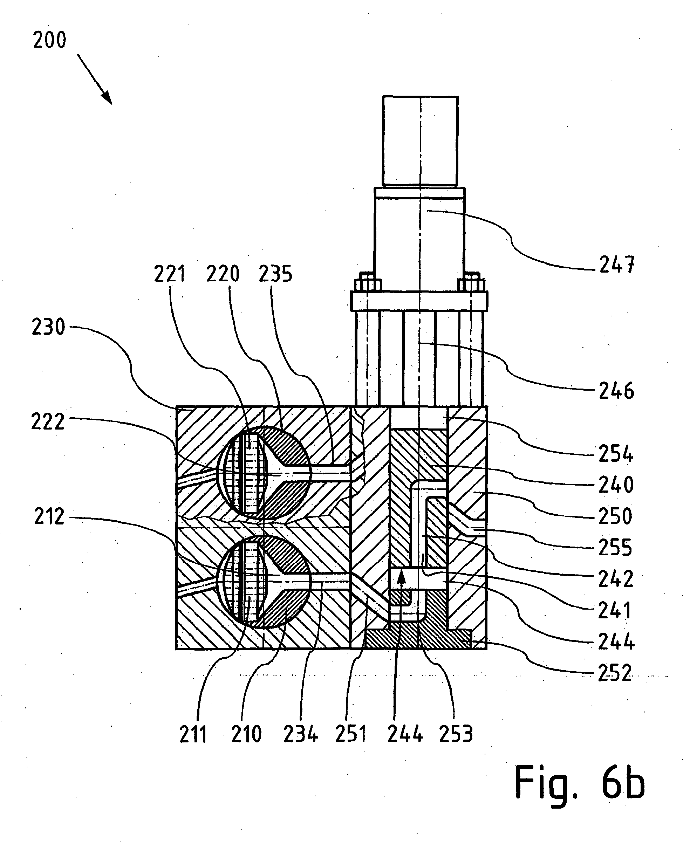

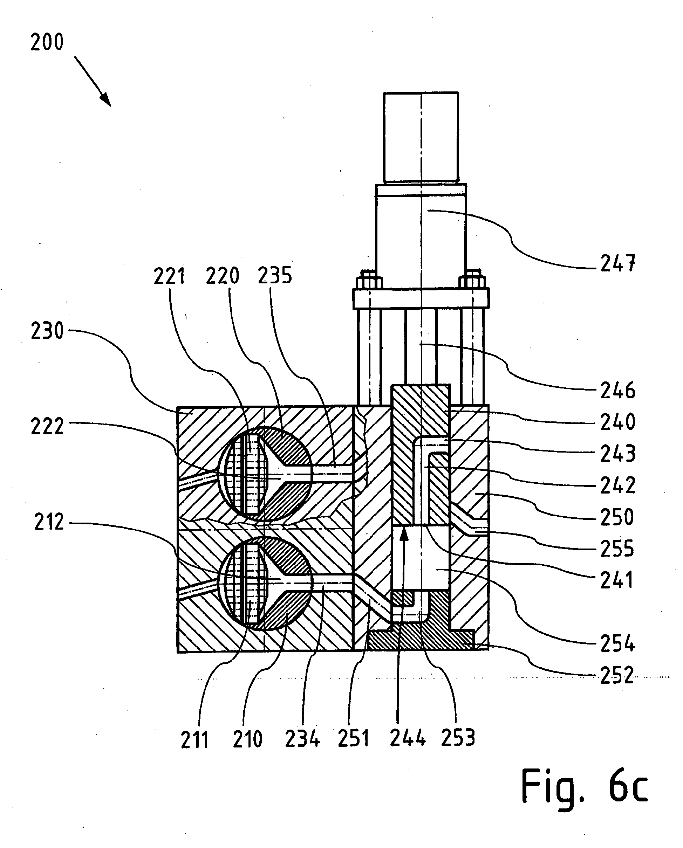

In Fig. 6b beginnt die Rückzugsbewegung des Verdrängerkolbens 240, um eine Rückspülung vorzubereiten. Mit dem Abheben der Stirnseite 244 des Verdrängerkolbens 240 von der Stirnseite des Absperrelements 252 wird ein Teil der als Fluidspeicher 254 dienenden Bohrung mit ihrem, gegenüber dem im Produktionsbetrieb lediglich genutzten Teilkanal, deutlich größeren Durchmesser offen gelegt. Wie auch Figur 6c zeigt, wird mit dem Hochziehen des Verdrängerkolbens 240 nicht nur der Fluidspeicher 254 deutlich vergrößert, sondern die Mantelfläche des Verdrängerkolbens 240 legt sich zugleich vor den Abfuhrkanal und dichtet diesen ab. Weiterhin ist der innere Fließkanal 242 am Verdrängerkolben 240 an seiner Austrittsöffnung durch die Mantelfläche der Bohrung 254 abgedichtet.

Zum Rückspülen des Filtermediums 211 im Siebraum 212 verfährt der Verdrängerkolben 240 wieder in seine Ausgangsstellung nach Figur 6a. Dabei presst er das im Fluidspeicher 254 zwischengespeicherte Fluid restlos durch den Teilkanal 253, 251, 234 zurück in den Siebraum, von wo das Fluid durch die Rückspülkanäle 231, 232 nach außen abfließen kann. Die Stirnseite 244 des Verdrängerkolbens legt sich wieder plan auf die obere Stirnfläche des Absperrelements 252'. Damit ist der Fließkanal mit engem Querschnitt für den Produktionsbetrieb wieder geöffnet, wohingegen der Fluidspeicher 254 vollständig durch den Verdrängerkolben 240 ausgefüllt ist, so dass dort keine Fluidreste verweilen können.

## Patentansprüche

1. Filtriervorrichtung (100; 200) für hochviskose Fluide, mit einem Gehäuse (30; 230) und wenigstens:
- einem verschiebbar im Gehäuse (30; 230) gelagerten Siebträgerelement (10, 20; 210, 220), das jeweils wenigstens einen Siebraum (12, 22; 212, 222) aufweist, in welchem ein Filterelement (11, 21; 211, 221) angeordnet ist,
- einem Zufuhrkanal und einem Rückspülkanal (31, 32) im Gehäuse (30; 230), welche Kanäle jeweils mit einer Schmutzseite des Siebraums (12, 22; 212, 222) in Verbindung bringbar sind,
- einem Teilkanal (34, 35; 35'; 234, 251, 254) im Gehäuse (30), der in Produktionsströmungsrichtung gesehen vom jeweiligen Siebraum (12, 22; 212, 222) zu einem Abfuhrkanal (33; 255) führt, wobei der Teilkanal wenigstens einen linearen Teilabschnitt (34, 35, 35'; 254) aufweist, von dem der Abfuhrkanal (33; 255) seitlich abzweigt;
- einem Verdrängerkolben (40; 40'; 40"; 240), der in den Teilkanal (34, 35; 35'; 254) einführbar und durch den das im Teilkanal (34, 35; 35'; 254) stehende Fluid entgegen der Produktionsströmungsrichtung durch das Filterelement (11, 21; 211, 212) hindurch in einen Rückspülkanal (31, 32) im Gehäuse pressbar ist,
**dadurch gekennzeichnet,**
- **dass** der Verdrängerkolben (40; 40'; 40"; 240) wenigstens eine innere Fluidleitung (42; 42'; 42"; 242) aufweist, welche sich von einer Einlauföffnung (41; 41'; 41") am Verdrängerkolben (40; 40'; 40"; 240) zu einer Auslauföffnung (43; 43'; 43"; 243) an seinem Umfang erstreckt;
- **dass** der Außendurchmesser des Verdrängerkolbens (40; 40'; 40"; 240) zumindest bereichsweise dem Innendurchmesser des Teilkanals (34, 35; 35'; 254) entspricht,
- **dass** der Verdrängerkolben (40; 40'; 40"; 240) in einer Produktionsstellung mit seiner Auslauföffnung (43; 43'; 43"; 243) vor der Einmündung des Abfuhrkanals (33; 255) in den Teilkanal (34, 35; 35'; 254) positionierbar ist;
- **dass** der Verdrängerkolben (40; 40'; 40"; 240) zum Speichern von Fluid innerhalb des Teilkanals (34; 2) in eine Rückspül-Ausgangsstellüng zurückziehbar ist, wobei entlang eines Rückspül-Verschiebewegs des Verdrängerkolbens (40; 40'; 40"; 240) die Einmündung des Abfuhrkanals (33) in den Teilkanal (35; 35') von der Außenwandung des Verdrängerkolbens (40; 40'; 40"; 240) überdeckt ist und/oder die Auslauföffnung (43; 43'; 43") des Verdrängerkolbens (40; 40'; 40"; 240) von der Innenwandung des Teilkanals (34, 35; 35') überdeckt ist.

2. Filtriervorrichtung (100; 100'; 100"; 200) nach Anspruch 1, **dadurch gekennzeichnet, dass** die Stirnseite (44; 244) des Verdrängerkolbens (40; 40'; 40"; 240) in einer Rückspülstellung nicht über ihre Lage in der Produktionsstellung hinaus gegen die Produktionsfließrichtung in den Teilkanal (34, 35; 35') hinein geschoben wird.

3. Filtriervorrichtung (100', 100") nach Anspruch 1 oder 2, **dadurch gekennzeichnet, dass** sich die innere Fluidleitung (42', 42") des Verdrängerkolbens (40'; 40") von einer Einlauföffnung (41', 41") am Umfang zu der Auslauföffnung (43'; 43") an seinem Umfang erstreckt.

4. Filtriervorrichtung (100; 200) nach Anspruch 1 oder 2, **dadurch gekennzeichnet, dass** sich die innere Fluidleitung (42; 242) des Verdrängerkolbens (40; 240) von einer Einlauföffnung (41; 241) an der Stirnseite (44; 244) zu der Auslauföffnung (43; 243) an seinem Umfang erstreckt.

5. Filtriervorrichtung (100; 100', 200) nach wenigstens einem der Ansprüche 1 bis 4, **dadurch gekennzeichnet, dass** am Verdrängerkolben (40; 40'; 240) ein Endabschnitt, in oder an dem die Einlauföffnung (41; 41'; 241) angeordnet ist, und ein mittlerer Abschnitt, in welchem die Auslauföffnung (43; 43'; 243') mündet, einteilig mit einer durchgängig zylindrischen Wandung ausgebildet sind.

6. Filtriervorrichtung (100; 200) nach wenigstens einem der Ansprüche 1 bis 5, **dadurch gekennzeichnet, dass** die Siebräume (12, 22; 212, 222) jeweils in einem bolzenförmigen Siebträgerelement (10, 20; 210, 220) angeordnet sind, welche in Bohrungen im Gehäuse (30; 230) verschiebbar geführt sind.

7. Filtriervorrichtung (100; 200) nach wenigstens einem der Ansprüche 1 bis 6, **dadurch gekennzeichnet, dass** wenigstens zwei Siebräume an jedem Siebträgerelement (10, 20; 210 220) vorgesehen sind.

8. Filtriervorrichtung (100) nach Anspruch 6 oder 7, **dadurch gekennzeichnet, dass** zwei Siebträgerelemente (10, 20; 210, 220) und zwei Verdrängerkolben (40; 40'; 40"; 240) vorgesehen sind, welche in die jeweiligen von den Siebräumen (12, 22; 212, 222) weg führenden Teilkanäle (34, 35; 35'; 244) einführbar sind.

9. Filtriervorrichtung (100) nach wenigstens einem der Ansprüche 6 bis 8, **dadurch gekennzeichnet, dass** die Kontur der Stirnseite (44) des Verdrängerkolbens (40) komplementär zur Bolzenform des Siebträgerelements (10, 20) ausgebildet ist.

10. Filtriervorrichtung nach wenigstens einem der Ansprüche 1 bis 5, **dadurch gekennzeichnet, dass** das Siebträgerelement ein Siebrad ist, das in dem Gehäuse drehbar gelagert ist und das eine Vielzahl von auf einem Teilkreis angeordneten Siebräumen aufweist.

11. Filtriervorrichtung (100) nach wenigstens einem der Ansprüche 1, 2 oder 4 bis 10, **dadurch gekennzeichnet, dass** der Abfuhrkanal (33) einen Winkel von α = 120° bis 150° mit dem zugeordneten Teilkanal (34) einschließt.

12. Filtriervorrichtung (100) nach wenigstens einem der Ansprüche 1 bis 11, **dadurch gekennzeichnet, dass** die Teilkanäle (34, 35) jeweils in einem Winkel von 30° bis 60° in Bezug auf eine vertikale Gehäuseachse angestellt sind.

13. Filtriervorrichtung (200) nach wenigstens einem, der Ansprüche 1 bis 12, **dadurch gekennzeichnet, dass** der Teilkanal (234, 251, 253, 254) jeweils in ein Zusatzgehäuse (250) umgelenkt ist, wo sich der Teilkanal (252) zu einem Speicherraum (244) erweitert, von dem der Abfuhrkanal (255) abzweigt und in den der Verdrängerkolben (240) eintaucht.

14. Filtriervorrichtung (200) nach Anspruch 13, **dadurch gekennzeichnet, dass** sich der als Speicherraum (244) ausgebildete Teilabschnitt des Teilkanals durchgängig von einer Seite des Zusatzgehäuses (250) zur gegenüberliegenden Seite erstreckt und dass an der der Eintrittsseite des Verdrängerkolbens (40; 40'; 40"; 240) gegenüberliegenden Seite ein Abschlusselement (252) mit wenigstens einem Umlenkungskanal (253) für den Teilkanal (35) den Speicherraum (244) abschließt, an dessen Stirnseite wenigstens eine Austrittsöffnung angeordnet ist, die in die innere Fluidleitung (241) des anliegenden Verdrängerkolbens (240) übergeht.

## Claims

1. Filtering device (100; 200) for high-viscosity fluids, with a housing (30; 230) and at least:
- a screen carrier element (10, 20; 210, 220), which is dislaceably mounted in the housing (30; 230) and has in each case at least one screening space (12, 22; 212, 222), in which a filter element (11, 21; 211, 221) is arranged;
- a feeding channel and a backflushing channel (31, 32) in the housing (30; 230), which channels can in each case be brought into connection with a soiled side of the screening space (12, 22; 212, 222);
- a partial channel (34, 35; 35'; 234, 251, 254) in the housing (30), which, when viewed in the direction of flow during production, runs from the respective screening space (12, 22; 212, 222) to a discharge channel (33; 255), wherein the partial channel has at least one linear partial section (34, 35, 35'; 254), from which the discharge channel (33; 255) branches off laterally;
- a displacing piston (40; 40'; 40"; 240), which can be inserted into the partial channel (34, 35; 35'; 254) and through which the fluid located in the partial channel (34, 35; 35'; 254) can be forced counter to the direction of flow during production through the filter element (11, 21; 211, 212) into a backflushing channel (31, 32) in the housing,
**characterized**
- **in that** the displacing piston (40; 40'; 40"; 240) has at least an inner fluid line (42; 42'; 42"; 242), which extends from an inlet opening (41; 41'; 41") at the displacing piston (40; 40'; 40"; 240) to an outlet opening (43; 43'; 43"; 243) at its circumference;
- **in that** the outside diameter of the displacing piston (40; 40'; 40"; 240) corresponds, at least in some regions thereof, to the inside diameter of the partial channel (34, 35; 35'; 254); in that, in a production position, the displacing piston (40; 40'; 40"; 240) can be positioned with its outlet opening (43; 43'; 43"; 243) in front of the mouth of the discharge channel (33; 255) in the partial channel (34, 35; 35'; 254);
- **in that** the displacing piston (40; 40'; 40"; 240) is retractable into a backflushing starting position for storing fluid within the partial channel (34; 2), wherein, along a backflushing displacement path of the displacing piston (40; 40'; 40"; 240), the mouth of the discharge channel (33) into the partial channel (35; 35') is covered by the outer wall of the displacing piston (40; 40'; 40"; 240) and/or the outlet opening (43; 43'; 43") of the displacing piston (40; 40'; 40"; 240) is covered by the inner wall of the partial channel (34, 35; 35').

2. Filtering device (100; 100'; 100"; 200) according to Claim 1, **characterized in that**, in a backflushing position, the end face (44; 244) of the displacing piston (40; 40'; 40"; 240) is not pushed into the partial channel (34, 35; 35') beyond its production position counter to the direction of flow during production.

3. Filtering device (100', 100") according to Claim 1 or 2, **characterized in that** the inner fluid line (42', 42") of the displacing piston (40'; 40") extends from an inlet opening (41', 41") at the circumference to the outlet opening (43'; 43") at its circumference.

4. Filtering device (100; 200) according to Claim 1 or 2, **characterized in that** the inner fluid line (42; 242) of the displacing piston (40; 240) extends from an inlet opening (41; 241) at the end face (44; 244) to the outlet opening (43; 243) at its circumference.

5. Filtering device (100; 100', 200) according to at least one of Claims 1 to 4, **characterized in that**, on the displacing piston (40; 40'; 240), an end section, in or at which the inlet opening (41; 41'; 241) is arranged, and a middle section, in which the outlet opening (43; 43'; 243') opens out, are formed as one part with a continuous cylindrical wall.

6. Filtering device (100; 200) according to at least one of Claims 1 to 5, **characterized in that** the screening spaces (12, 22; 212, 222) are in each case arranged in a bolt-shaped screen carrier element (10, 20; 210, 220), which elements are displaceably guided in bore holes in the housing (30; 230).

7. Filtering device (100; 200) according to at least one of Claims 1 to 6, **characterized in that** at least two screening spaces are provided at each screen carrier element (10, 20; 210, 220).

8. Filtering device (100) according to Claim 6 or 7, **characterized in that** two screen carrier elements (10, 20; 210, 220) and two displacing pistons (40; 40'; 40"; 240), which can be inserted into the respective partial channels (34, 35; 35'; 244) that lead away from the screening spaces (12, 22; 212, 222), are provided.

9. Filtering device (100) according to at least one of Claims 6 to 8, **characterized in that** the contour of the end face (44) of the displacing piston (40) is formed to complement the bolt shape of the screen carrier element (10, 20).

10. Filtering device according to at least one of Claims 1 to 5, **characterized in that** the screen carrier element is a screen wheel, which is rotatably mounted in the housing and has multiple screening spaces arranged on a pitch circle.

11. Filtering device (100) according to at least one of Claims 1 and 2 or 4 to 10, **characterized in that** the discharge channel (33) forms an angle of α = 120° to 150° with the associated partial channel (34).

12. Filtering device (100) according to at least one of Claims 1 to 11, **characterized in that** the partial channels (34, 35) are in each case set at an angle of 30° to 60° with respect to a vertical housing axis.

13. Filtering device (200) according to at least one of Claims 1 to 12, **characterized in that** the partial channel (234, 251, 253, 254) is in each case redirected into an additional housing (250), where the partial channel (252) widens into a storing space (244), from which the discharge channel (255) branches off and into which the displacing piston (240) enters.

14. Filtering device (200) according to Claim 13, **characterized in that** the partial section of the partial channel that is formed as a storing space (244) extends continuously from one side of the additional housing (250) to the opposite side and **in that**, at the side opposite from the inlet side of the displacing piston (40; 40'; 40"; 240), a closing-off element (252) with at least one redirection channel (253) for the partial channel (35) closes off the storing space (244), at the end face of which there is arranged at least one outlet opening that goes over into the inner fluid line (241) of the adjacent displacing piston (240).

## Revendications

1. Dispositif de filtration pour fluides de haute viscosité (100 ; 200), comprenant un boîtier (30 ; 230) et au moins :
- un élément de support de tamis (10, 20 ; 210, 220) supporté de manière déplaçable dans le boîtier (30 ; 230), qui présente à chaque fois au moins un espace de tamis (12, 22 ; 212, 222) dans lequel est disposé un élément de filtre (11, 21 ; 211, 221),
- un canal d'alimentation et un canal de rinçage à contre-courant (31, 32) dans le boîtier (30 ; 230), lesquels canaux peuvent chacun être amenés en liaison avec un côté sale de l'espace de tamis (12, 22 ; 212, 222),
- un canal partiel (34, 35 ; 35' ; 234, 251, 254) dans le boîtier (30), lequel, vu dans la direction d'écoulement de production, conduit depuis chaque espace de tamis (12, 22 ; 212, 222) à un canal d'évacuation (33 ; 255), le canal partiel présentant au moins une portion partielle linéaire (34, 35, 35' ; 254) depuis laquelle le canal d'évacuation (33 ; 255) part latéralement ;
- un piston de refoulement (40 ; 40' ; 40'' ; 240) qui peut être introduit dans le canal partiel (34, 35 ; 35' ; 254) et par lequel le fluide se trouvant dans le canal partiel (34, 35 ; 35' ; 254) peut être pressé à l'encontre de la direction d'écoulement de production à travers l'élément de filtre (11, 21 ; 211, 212) dans un canal de rinçage à contre-courant (31, 32) dans le boîtier,
**caractérisé en ce que**
- le piston de refoulement (40 ; 40' ; 40'' ; 240) présente au moins une conduite de fluide interne (42 ; 42' ; 42'' ; 242), qui s'étend depuis une ouverture d'entrée (41 ; 41' ; 41'') au niveau du piston de refoulement (40 ; 40' ; 40'' ; 240) jusqu'à une ouverture de sortie (43 ; 43' 43'' ; 243) au niveau de sa périphérie ;
- le diamètre extérieur du piston de refoulement (40 ; 40' ; 40'' ; 240) correspond au moins en partie au diamètre intérieur du canal partiel (34, 35 ; 35' ; 254),
- le piston de refoulement (40 ; 40' ; 40'' ; 240) peut être positionné dans une position de production avec son ouverture de sortie (43 ; 43' ; 43'' ; 243) devant l'embouchure du canal d'évacuation (33 ; 255) dans le canal partiel (34, 35 ; 35' ; 254) ;
- le piston de refoulement (40 ; 40' ; 40'' ; 240), pour stocker du fluide à l'intérieur du canal partiel (34 ; 2), peut être retiré dans une position de sortie de rinçage à contre-courant, l'embouchure du canal d'évacuation (33) dans le canal partiel (35 ; 35') étant recouverte par la paroi extérieure du piston de refoulement (40 ; 40' ; 40'' ; 240) le long d'une voie de déplacement de rinçage à contre-courant du piston de refoulement (40 ; 40' ; 40'' ; 240) et/ou l'ouverture de sortie (43 ; 43' ; 43'') du piston de refoulement (40 ; 40' ; 40'' ; 240) étant recouverte par la paroi interne du canal partiel (34, 35 ; 35').

2. Dispositif de filtration (100 ; 100' ; 100'' ; 200) selon la revendication 1, **caractérisé en ce que** le côté frontal (44 ; 244) du piston de refoulement (40 ; 40' ; 40'' ; 240), dans une position de rinçage à contre-courant, est poussé à l'encontre de la direction d'écoulement de production dans le canal partiel (34, 35 ; 35'), mais pas au-delà de sa position dans la position de production.

3. Dispositif de filtration (100', 100'') selon la revendication 1 ou 2, **caractérisé en ce que** la conduite de fluide interne (42', 42'') du piston de refoulement (40' ; 40'') s'étend depuis une ouverture d'entrée (41', 41'') à la périphérie jusqu'à l'ouverture de sortie (43' ; 43'') à sa périphérie.

4. Dispositif de filtration (100 ; 200) selon la revendication 1 ou 2, **caractérisé en ce que** la conduite de fluide interne (42 ; 242) du piston de refoulement (40 ; 240) s'étend depuis une ouverture d'entrée (41 ; 241) au niveau du côté frontal (44 ; 244) jusqu'à l'ouverture de sortie (43 ; 243) au niveau de sa périphérie.

5. Dispositif de filtration (100 ; 100', 200) selon au moins l'une quelconque des revendications 1 à 4, **caractérisé en ce qu'**une portion d'extrémité, dans laquelle ou sur laquelle est disposée l'ouverture d'entrée (41 ; 41' ; 241), au niveau du piston de refoulement (40 ; 40' ; 240), et une portion centrale, dans laquelle débouche l'ouverture de sortie (43 ; 43' ; 243'), sont réalisées d'une seule pièce avec une paroi cylindrique sur toute la longueur.

6. Dispositif de filtration (100 ; 200) selon au moins l'une quelconque des revendications 1 à 5, **caractérisé en ce que** les espaces de tamis (12, 22 ; 212, 222) sont à chaque fois disposés dans un élément de support de tamis en forme de boulon (10, 20 ; 210, 220), lesquels éléments de support de tamis sont guidés de manière déplaçable dans des alésages dans le boîtier (30 ; 230).

7. Dispositif de filtration (100 ; 200) selon au moins l'une quelconque des revendications 1 à 6, **caractérisé en ce qu'**au moins deux espaces de tamis sont prévus sur chaque élément de support de tamis (10, 20 ; 210, 220).

8. Dispositif de filtration (100) selon la revendication 6 ou 7, **caractérisé en ce que** deux éléments de support de tamis (10, 20 ; 210, 220) et deux pistons de refoulement (40 ; 40' ; 40'' ; 240) sont prévus, lesquels peuvent être introduits dans les canaux partiels respectifs (34, 35 ; 35' ; 244) conduisant à l'écart des espaces de tamis (12, 22 ; 212, 222).

9. Dispositif de filtration (100) selon au moins l'une quelconque des revendications 6 à 8, **caractérisé en ce que** le contour du côté frontal (44) du piston de refoulement (40) est réalisé de manière complémentaire à la forme de boulon de l'élément de support de tamis (10, 20).

10. Dispositif de filtration selon au moins l'une quelconque des revendications 1 à 5, **caractérisé en ce que** l'élément de support de tamis est une roue de tamis, laquelle est supportée de manière rotative dans le boîtier, et présente une pluralité d'espaces de tamis disposés sur un cercle partiel.

11. Dispositif de filtration (100) selon au moins l'une quelconque des revendications 1, 2 ou 4 à 10, **caractérisé en ce que** le canal d'évacuation (33) forme un angle α égal à 120° à 150° avec le canal partiel associé (34).

12. Dispositif de filtration (100) selon au moins l'une quelconque des revendications 1 à 11, **caractérisé en ce que** les canaux partiels (34, 35) sont chacun inclinés suivant un angle de 30° à 60° par rapport à un axe de boîtier vertical.

13. Dispositif de filtration (200) selon au moins l'une quelconque des revendications 1 à 12, **caractérisé en ce que** le canal partiel (234, 251, 253, 254) est à chaque fois dévié dans un boîtier supplémentaire (250) où le canal partiel (252) s'élargit jusqu'à un espace de stockage (244) depuis lequel part le canal d'évacuation (255) et dans lequel plonge le piston de refoulement (240).

14. Dispositif de filtration (200) selon la revendication 13, **caractérisé en ce que** la portion partielle du canal partiel réalisée en tant qu'espace de stockage (244) s'étend en continu depuis un côté du boîtier supplémentaire (250) jusqu'au côté opposé et **en ce qu'**au niveau du côté opposé au côté d'entrée du piston de refoulement (40 ; 40' ; 40'' ; 240), un élément de terminaison (252) avec au moins un canal de déviation (253) pour le canal partiel (35) ferme l'espace de stockage (244), au niveau du côté frontal duquel est disposée au moins une ouverture de sortie qui se prolonge dans la conduite de fluide interne (241) du piston de refoulement appliqué (240).
